# EUROPEAN PATENT APPLICATION

(11) **EP 1 748 221 A2**
(43) Date of publication of application: **31.01.2007**
(21) Application number: 06015816.9
(22) Date of filing: 28.07.2006
(51) Int. Cl.: F16G 13/06, F16G 5/18

(54) **Power transmission chain and power transmission device**

(30) Priority: 29.07.2005 JP 2005221420
(71) Applicant: JTEKT Corporation, Chuo-ku, Osaka-shi Osaka 542-8502 (JP)
(72) Inventor: Miura, Yoshihisa, Osaka-shi Osaka 542-8502 (JP)
(74) Representative: TER MEER - STEINMEISTER & PARTNER GbR

(57) **Abstract**

A power transmission chain includes a plurality of links (11,21), a plurality of pins (14), and a plurality of interpieces (15). Each of the plurality of links (11,21) is formed of a link (11) with a column of which stretch is suppressed by having front and back insertion parts (12,13) made to be respectively independent through holes, and a link (21) without a column which is relatively stretched easily by connecting front and back insertion parts (12,13) into one through hole. The links (11) with columns and the links (21) without columns are mixed based on a certain mixture pattern.

## Description

### BACKGROUND OF THE INVENTION

The present invention relates to a power transmission chain, and more particularly, to a power transmission chain preferable for a continuously variable transmission (CVT) of an automobile or the like and a power transmission device using the power transmission chain.

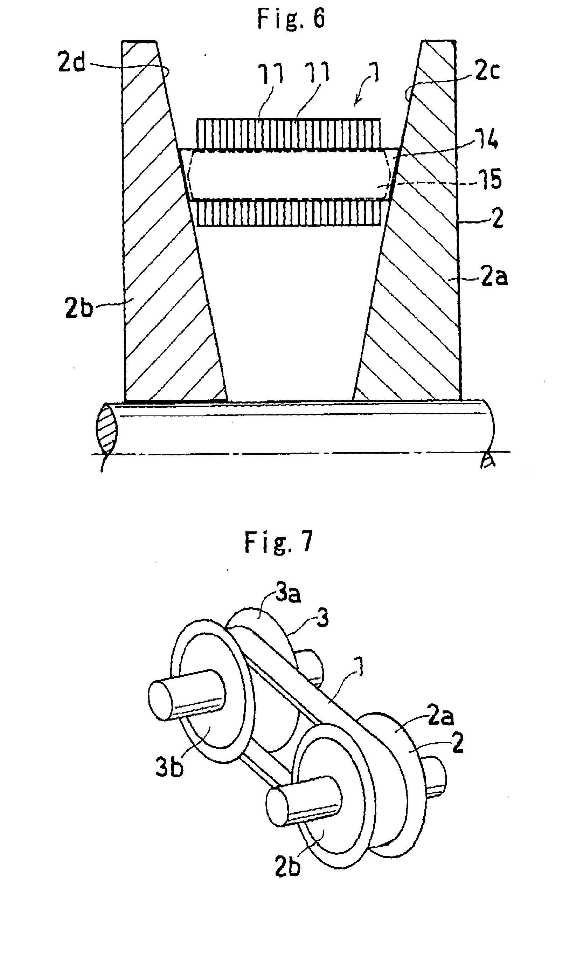

As shown in Fig. 7, as a continuously variable transmission for an automobile, there has been known one which includes: a drive pulley (2) having a fixed sheave (2a) and a movable sheave (2b), which is provided on an engine side; a driven pulley (3) having a fixed sheave (3b) and a movable sheave (3a), which is provided on a drive wheel side; and an endless power transmission chain (1) which is provided over the both, in which the movable sheaves (2b) and (3a) are caused to come close to or leave away from the fixed sheaves (2a) and (3b) by a hydraulic actuator, whereby a chain (1) is cramped by a hydraulic pressure so as to cause a contact load between the pulleys (2) and (3) and the chain (1), and torque is transmitted by a frictional force of the contact part.

As the power transmission chain, Publication of Japanese Patent Application Laid-open No. H08-312725 proposes one which includes: a plurality of links having front and back insertion parts through which pins are inserted; and a plurality of first pins and a plurality of second pins for connecting the links aligned in a chain width direction so as to be bendable in a longitudinal direction such that a front insertion part of one link and a back insertion part of another link correspond to each other, in which a first pin fixed to a front insertion part of one link and movably fitted in a back insertion part of another link and a second pin movably fitted in the front insertion part of the one link and fixed to the back insertion part of the other link move relatively in a rolling and contacting manner so as to enable bending in the longitudinal direction between the links.

The power transmission chain according to Publication of Japanese Patent Application Laid-open No. H08-312725 has been required to be further downsized and be further decreased in weight. However, there is generally a tendency such that a durability of a link is lowered if the power transmission chain is downsized or decreased in weight. A main cause of the link damage is a fatigue cut damage due to the fact that the chain continuously receives a stress. Therefore, as a counter measure against this, it is considerable that the link is formed in a shape such that the link is easily transformed (easily stretched) so as to suppress a stress generated in the link. However, if the stretch of the link becomes larger, the entire length of the chain is made longer so that there is a possibility that a transmission performance and a driving performance necessary for the chain cannot be maintained.

### SUMMARY OF THE INVENTION

An object of the present invention is to provide a power transmission chain and a power transmission device which can relax concentration of stresses generated in the link and suppress stretch of the chain at the appropriate value.

A power transmission chain according to the present invention includes a plurality of links having front and back insertion parts through which pins are inserted; and a plurality of first pins and a plurality of second pins aligned back and forth, for connecting the links aligned in a chain width direction so that a front insertion part of one link corresponds to a back insertion part of another link; wherein the first pins and the second pins move relatively in a rolling and contacting manner so as to enable bending in a longitudinal direction of the links, each of the plurality of links is formed of a link with a column of which stretch is suppressed by having the front and back insertion parts as respectively independent through holes, and a link without a column which is relatively easily stretched by connecting the front and back insertion parts into one through hole; and the links with columns and the links without columns are mixed based on a certain mixture pattern.

In the link with a column, independent front and back through holes are formed in the link, and the front through hole is made into a front insertion part and the back through hole is made into a back insertion part. In the link without a column, one through hole which is longer back and forth is formed in the link and the front part of the through hole is made into a front insertion part and the rear part of it is made into a back insertion part, respectively.

Each number of the link with a column and the link without a column can be freely set. The mixture pattern can be obtained, for example, by replacing the link with a column located at the place where concentration of stress easily occurs (the opposite end portions in the width direction or the part having the less number of links per row or the like) with the link without a column under the condition that stretch of the chain is kept appropriately based on the case that all of the links have the columns.

Any one of the first pin and the second pin may be pressed and fixed in the front and back insertion parts of the link or the both of them may not be fixed (they are movably fixed). In addition, the first pin and the second pin have the different sectional shapes or they may have the same shapes. Further, the first pin and the second pin may be formed in the same lengths and the both of them may contact the sheave faces, or they may be formed in the different lengths and only the longer one may contact the sheave face.

At least one of the first pin and the second pin may transmit a power by a frictional force contacting the pulley. In the chain where any one of the pins contacts the pulley, any one of the first pin and the second pin is defined as a pin to contact the pulley when this chain is used by a continuously variable transmission (hereinafter, referred to as "a pin"), and the other one is defined as a pin not to contact the pulley (referred to as an interpiece or a strip, hereinafter, referred to as "an interpiece").

In the first pin and the second pin, for example, one contact surface is flat, and the other contact surface is formed into a desired curved face so that the pin can move in a rolling and contacting relatively. In addition, in the first pin and the second pin, each contact surfaces may be formed in a desired curved face. In any case, forming the shape of the contact surface of each pin of two kinds, respectively (for example, the shape having a relatively large curvature and the shape having a relatively small curvature), two kinds of sets of pins may be provided having the different loci of the rolling-contact movement. For example, the locus of a contact position of the first pin and the second pin is an involute of a circle.

Further, in this specification, one end side in the longitudinal direction of the link is defined as a front part and the other end side is defined as a back part; however, this does not mean that the longitudinal direction always coincides with the front and back directions.

For example, the link is made of a spring steel and a carbon tool steel; however, the material of the link is not limited to the spring steel and the carbon tool steel but it is obvious that the link is made of other steels such as a bearing steel. As a material of the pin, appropriate steel such as bearing steel is used.

The pin is fixed to the front and back insertion parts in such a manner that the inner margin of the insertion part is fitted to the outer circumferential face, for example, by mechanical pressing; however, in place of this, interference shrink fit or cooling fit may be available. The first pin and the second pin are fitted in one insertion part so as to face each other in the longitudinal direction of the chain, and any one of them is fitted and fixed on the circumferential face of the insertion part of the link. This fixing by fitting is preferably carried out at the edges (the upper and lower edges) being at right angles each other with respect to the longitudinal direction of the insertion part. Thus, in the chain to fix the pin by fitting, since the stress of the fixing part is increased, an advantage of relaxation of concentration of stresses due to usage of the link without a column becomes particularly remarkable.

In the mixture pattern, for example, all the links corresponding to the width direction are either the links with columns or the links without columns. In this case, in the chain having the different number of links aligned in a row in the width direction, by making the row having more links of links without columns and making the row having less links of links with columns, it is possible to easily balance suppress of stretch and relaxation of concentration of stresses. Alternatively, in the mixture pattern, the links located at a most outside in the width direction of each row are the links without columns and the remaining links are the links with columns.

For example, this power transmission chain is manufactured by holding the necessary number of pins and interpieces perpendicularly on a table and then, pressing the links one by one or in several pieces. Then, by pressing the appropriate number of the link with a column and the link without a column one after the other in the case of pressing the pin and the interpiece in the link, each link can be arranged based on a certain mixture pattern.

It is preferable that the power transmission chain described above be one in which one pin (interpiece) is to be shorter than the other pin (pin), and end faces of the longer pin contact conical sheave faces of a pulley of the continuously variable transmission, and power is transmitted by a frictional force caused by this contact. Each pulley is made by a fixing sheave having a conical sheave face and a movable sheave having a conical sheave face facing the sheave face of the fixing sheave, and a chain is interposed between the sheave faces of the both sheaves, and the movable sheave is moved by a hydraulic actuator whereby a winding radius of the chain changes depending on the distance between the sheave faces of the continuously variable transmission, which enables variable transmission continuously with smooth movement.

A power transmission device according to the present invention includes a first pulley having a conical sheave face, a second pulley having a conical sheave face, and a power transmission chain provided over the first and second pulleys; wherein the power transmission chain is any of the power transmission chain as described above.

The power transmission device becomes one preferable to be used as a continuously variable transmission of an automobile or the like.

According to the power transmission chain and the power transmission device, since the links with columns and the links without columns are mixed, concentration of stresses is more relaxed as compared to the case that all of the links have the columns because the link without a column is easily stretched. In addition, since stretch of the entire length of the chain is more suppressed as compared to the case that all links have no column, it is possible to prevent a transmission performance and a driving performance necessary for the chain from being reduced. Thus, without chanaing the outline shapes of the link and without deteriorating other performances, the durability of the link can be improved.

### BRIEF DESCRIPTION OF THE DRAWINGS

Fig. 1 is a plan view showing a part of a power transmission chain according to a first embodiment of the present invention;
Fig. 2 is an enlarged perspective view of the same;
Fig. 3 is an enlarged side view of a link with a column;
Fig. 4 is an enlarged side view of a link without a Column;
Fig. 5 is a plan view showing a part of a power transmission chain according to a second embodiment of the present invention;
Fig. 6 is a front view showing a state that the power transmission chain is disposed to a pulley; and
Fig. 7 is a perspective view showing one example of a continuously variable transmission in which the power transmission chain according to the present invention is used.

### DESCRIPTION OF THE PREFERRED EMBODIMENTS

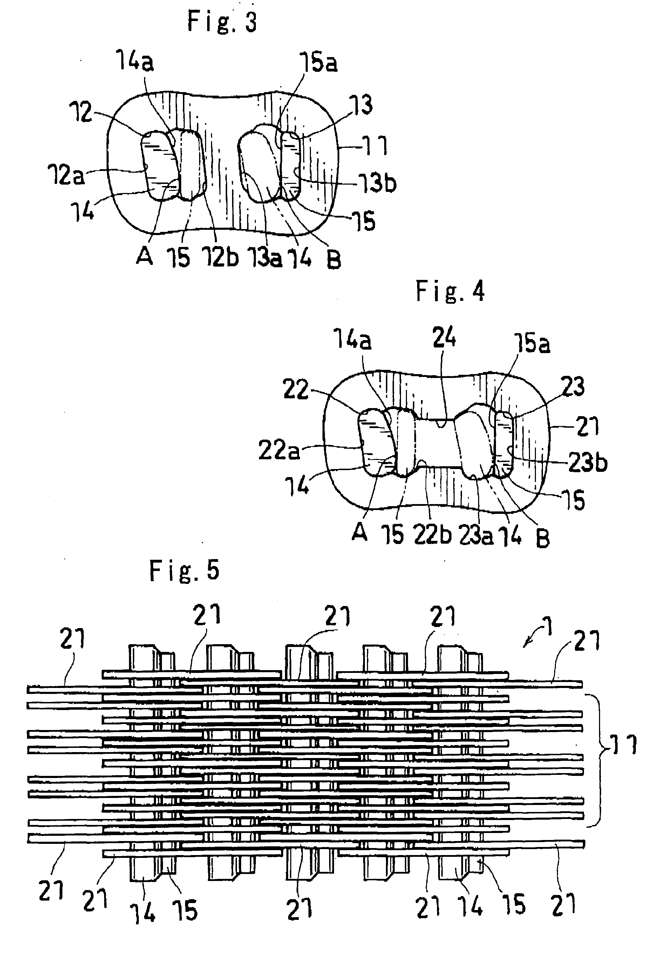

With reference to the drawings, embodiments of the present invention will be described below. In the following description, up and down refer to up and down in Fig. 3.

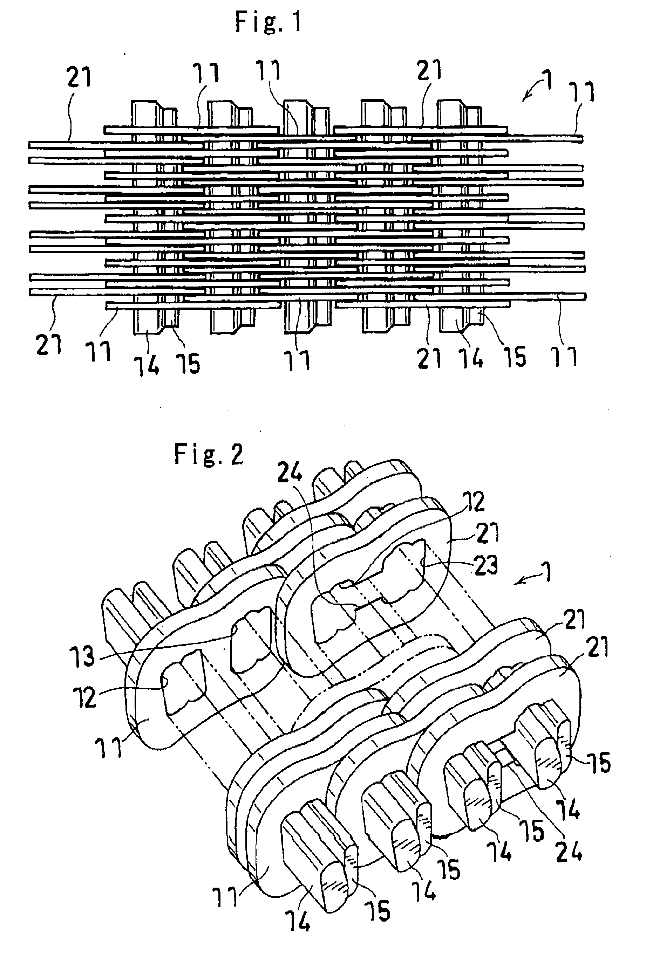

Fig. 1 and Fig. 2 show a part of a power transmission chain according to the present invention. A power transmission chain (1) includes a plurality of links (11) and (21) having front and back insertion parts (12), (13), (22), and (23) which are disposed at certain intervals in a longitudinal direction of the chain; and a plurality of pins (first pins) (14) and interpieces (second pins) (15) for connecting the links (11) and (21) aligned in a chain width direction so as to be bendable in a longitudinal direction.

For the links (11) and (21), two types, namely, the link with a column (11) having the front and back insertion parts (12) and (13) which are independent through holes, respectively; and the link without a column (21) connecting the front and back insertion parts (12) and (13) by a continuous part (24) so as to form one through hole are used, and these link with a column (11) and link without a column (21) are mixed based on a certain mixture pattern.

As shown in Fig. 3, the front insertion part (12) of the link with a column (11) is formed by a pin fixing part (12a) on which the pin (14) (shown by a solid line) is fixed and an interpiece movable part (12b) to which the interpiece (15) (shown by a dashed-two dotted line) is movably fitted; and the back insertion part (13) is formed by a pin movable part (13a) to which the pin (14) (shown by a dashed-two dotted line) is movably fitted and an interpiece fixing part (13b) on which an interpiece (15) (shown by a solid line) is fixed.

In the same way, as shown in Fig. 4, the front insertion (22) of the link without a column (21) is formed by a pin fixing part (22a) on which the pin (14) (shown by a solid line) is fixed and an interpiece movable part (22b) to which the interpiece (15) (shown by a dashed-two dotted line) is movably fitted; and the back insertion part (23) is formed by a pin movable part (23a) to which the pin (14) (shown by a dashed-two dotted line) is movably fitted and an interpiece fixing part (23b) on which the interpiece (15) (shown by a solid line) is fixed. The front insertion (22) and the back insertion part (23) of the link without a column (21) are formed in the same shapes as the front insertion part (12) and the back insertion part (13) of the link with a column (11).

As a result, the link with a column (11) and the link without a column (21) are only different in with or without of the continuous part (24) and their outline shapes and the shapes of respective insertion parts (12), (13), (22), and (23) are the same. Depending on with or without of the continuous part (24), the stretch of the link with a column (11) is relatively suppressed and the link without a column (21) is relatively stretchy.

This power transmission chain (1) is manufactured by holding the necessary number of pins (14) and interpieces (15) perpendicularly on a table and then, pressing the links (11) and (12) one by one, They are pressed between the upper and lower edge portions of the pin (14) and the interpiece (15) and between the upper and lower edge portions of the pin fixing parts (12a), (22a) and the interpiece fixing parts (13b), (23b); and the margin is within the range of 0.005 mm to 0.1 mm.

When connecting the links (11) and (21) aligned in a chain width direction, the links (11) and (21) are superimposed with each other so that the front insertions parts (12), (22) of certain links (11), (21) correspond to the back insertion parts (13), (23) of other links (11), (21); the pin (14) is fixed to the front insertion parts (12), (22) of the certain links (11), (21) and is movably fitted in the back insertion parts (13), (23) of the other links (11), (21) ; and the interpiece (15) is movably fitted in the front insertion parts (12), (22) of the certain links (11), (21) and is fixed to the back insertion parts (13), (23) of the other links (11), (21). Then, this pin (14) and this interpiece (15) move in a rolling and contacting manner relatively so as to enable bending in a longitudinal direction (front and back direction) of the links (11), (21). The locus of a contact position of the pin (14) and the interpiece (15) based on the pin (14) is an involute of a circle. In this embodiment, a contact surface (14a) of the pin (14) is in an involute shape having a basic circle of a radius Rb and the center M in a section, and a contact surface (15a) of the interpiece (15) is flat (sectional shape is a line). Thereby, when respective links (11) and (12) move from the linear part to the circular part or moves from the circular part to the linear part of the chain (1), in the front insertion parts (12) and (22), the interpiece (15) moves such that the contact surface (15a) thereof rolling-contacts the contact surface (14a) of the pin (14) with respect to the fixed pin (14) in the interpiece movable parts (12b) and (22b) (including a slight sliding contact), and in the back insertion parts (13) and (23), the pin (14) moves in the pin movable part (13a) such that the contact surface (14a) thereof rolling-contacts the contact surface (15a) of the interpiece (15) with respect to the fixed interpiece (15) (including a slight sliding contact). In Fig. 3 and Fig. 4, the parts shown by the reference marks A and B are lines (points in the section) where the pin (14) and the interpiece (15) contact each other in the linear part of the chain (1), and the distance between A and B is considered as a pitch here.

The front insertion (22) and the back insertion part (23) of the link without a column (21) are formed in the same shapes as the front insertion part (12) and the back insertion part (13) of the link with a column (11), so that it can be freely set on which position the link with a column (11) and the link without a column (21) are arranged.

According to the example shown in Fig. 1, all of the links corresponding to the width direction of the chain (1) (one example) fall into any of the link with a column (11) and the link without a column (21). The illustration is herein omitted, however, in one row, the link with a column (11) and the link without a column (21) may be alternately arranged. In any case of that anyone of the link with a column (11) and the link without a column (21) is used in one row and that the link with a column (11) and the link without a column (21) are mixed in one row, it is not necessary that the number of the link with a column (11) is equal to the number of the link without a column (21) and the number of both is decided depending on a balance between suppress of stretch and relaxation of concentration of stresses.

Fig. 5 shows the other embodiment of the mixing pattern. In Fig. 5, the links located at the most outside in the width direction of each row are defined as the links (21) and the other links are defined as the links (11). The links (21) arranged at the opposite ends of the chain (1) receives a relatively large force. Since these links (21) have no columns, the concentration of stresses of the chain (1) is efficiently relaxed.

This power transmission chain (1) is used in a CVT shown in Fig. 6, and in such a case, for example, the interpiece (the second pin) (15) is set to be shorter than the pin (the first pin) (14), and end faces of the pin (14) contact the conical sheave faces (2c) and (2d) of the pulley (2) in a state where end faces of the interpiece (15) do not contact respective conical sheave faces (2c) and (2d) of the fixed sheave (2a) and the movable sheave (2b) of the pulley (2), and power is transmitted by a frictional force caused by this contact. Since the pin (14) and the interpiece (15) move in a rolling and contacting manner as described above, the pin (14) will seldom rotate with respect to the sheave faces '(2c) and (2d) of the pulley (2), whereby frictional loss is reduced and high power transmission rate is secured.

Further, the above-described structure that the link with a column (11) and the link without a column (21) are mixed also can be applied to a chain that the lengths of the first pin and the second pin are approximately the same and the both pins contact the sheave faces. Further, this structure can be applied to a chain that the both of the first pin and the second pin are movably fitted in the front and back insertion parts and other various types of the power transmission chains.

## Claims

1. A power transmission chain comprising: a plurality of links having front and back insertion parts through which pins are inserted; and a plurality of first pins and a plurality of second pins aligned back and forth, for connecting the links aligned in a chain width direction so that a front insertion part of one link corresponds to a back insertion part of another link; wherein the first pins and the second pins move relatively in a rolling and contacting manner so as to enable bending in a longitudinal direction of the links,
each of the plurality of links is formed of a link with a column of which stretch is suppressed by having the front and back insertion parts as respectively independent through holes, and a link without a column which is relatively easily stretched by connecting the front and back insertion parts into one through hole; and the links with columns and the links without columns are mixed based on a certain mixture pattern.

2. The power transmission chain according to Claim 1, wherein, in the mixture pattern, all the links corresponding to the width direction are either the links with columns or the links without columns.

3. The power transmission chain according to Claim 1, wherein, in the mixture pattern, the links located at a most outside in the width direction of each row are the links without columns and the remaining links are the links with columns.

4. The power transmission chain according to Claim 1, wherein one of the first pin and the second pin is fixed to the front insertion part of one link and is movably fitted in the back insertion part of the other link; and the other one of the first pin and the second pin is movably fitted in the front insertion part of the one link and is fixed to the back insertion part of the other link.

5. A power transmission device comprising: a first pulley having a conical sheave face, a second pulley having a conical sheave face, and a power transmission chain provided over the first and second pulleys; wherein the power transmission chain is the power transmission chain according to any one of Claims 1 to 4.
